(19) Europäisches Patentamt / European Patent Office / Office européen des brevets

(11) **EP 1 936 855 A1**

(12) **EUROPEAN PATENT APPLICATION**

(43) Date of publication:
**25.06.2008 Bulletin 2008/26**

(51) Int Cl.:
*H04L 5/02* (2006.01)          *H04L 5/06* (2006.01)
*H04L 5/14* (2006.01)          *H04L 27/26* (2006.01)
*H04L 1/00* (2006.01)

(21) Application number: **06292041.8**

(22) Date of filing: **21.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Alcatel Lucent**
**75008 Paris (FR)**

(72) Inventors:
• **Ysebaert, Geert Bert Maarten**
**3020 Winksele (Herent) (BE)**
• **Van Bruyssel, Danny**
**9140 Temse (BE)**

(74) Representative: **Narmon, Gisèle Marie Thérèse**
**Alcatel Bell N.V.**
**Copernicuslaan 50**
**2018 Antwerpen (BE)**

(54)    **Method and apparatus for configuring data paths over a multi-carrier signal**

(57)    The present invention relates to a transceiver unit comprising:
- a receiver (11) adapted to receive a multi-carrier signal (22) from a physical transmission medium (21),
- a configuration means (14) adapted to configure a plurality of data paths (LP1, LP2) with different error correction capabilities over the multi-carrier signal,

A transceiver according to the invention is characterized in that the multi-carrier transceiver unit further comprises a measurement unit (13) coupled to the receiver, and adapted to measure on a per-carrier basis exposures to impulse noise coupling into the multi-carrier signal,
and in that the configuration means is further coupled to the measurement unit, and is further adapted to map the plurality of data paths onto carriers (23) of the multi-carrier signal based on the measured exposures.

The present invention also relates to a method for configuring a plurality of data paths with different error correction capabilities over a multi-carrier signal.

Fig. 1

**EP 1 936 855 A1**

**Description**

The present invention relates to a multi-carrier transceiver comprising:

- a receiver adapted to receive a multi-carrier signal from a physical transmission medium,
- a configuration means adapted to configure a plurality of data paths with different error correction capabilities over said multi-carrier signal.

At present, operators are willing to upgrade their legacy access networks to offer higher bit rates to enable triple play services. Operating at higher bit rates, however, brings additional stability problems, since the legacy subscriber loops are deployed near the edge of performance.

One of the main challenges today is to mitigate the effects of time-varying noise, such as impulse noise. Impulse noise is noise of short duration, which can ripple through the protocol stack and eventually affect the application layer.

Error correction codes, such as Reed Solomon (RS) codes, possibly combined with data interleaving, can mitigate the effects of impulse noise. Yet, as soon as additional impulse noise appears, e.g. due to a light switch or a dimmer at the customer premises, the error correction code will be broken and data will be corrupted, leading to erroneous data packets. Hence, a subscriber may experience serious visual artifacts when watching a video in the presence of strong impulse noise.

A number of prior art solutions exist:

- Adjusting the amount of error correction per line: the amount of error correction overhead and/or the interleaving depth can be increased to make the system more robust for the overall amount of impulse noise that a subscriber is undergoing.
- Injecting a controllable level of noise at the receiver or at the transmitter, or increasing the noise margin, so as to mask the impact of impulse noise because of a too low background noise level.
- Intervention of a technician to improve in-house wiring, which is typically the cause of impulse noise pick-up.

These prior art solutions have the following drawbacks:

- Additional error correction leads to a decrease in the usable data rate. In other words, the more error correction, the less data rate is available.
- Artificial noise, although working well for protecting against increasing crosstalk, will be able to mask the impulse noise only at the expense of the usable data rate.
- Detecting and solving in-house cabling problems through human intervention is on cost of high OPEX.

whereas video on Demand (or VOD) or broadcast IPTV services are very sensitive to packet errors, voice over IP (or VOIP) and high-speed Internet services can tolerate more packet errors. This is the underlying reason why dual latency was introduced: the communication channel is divided into two data paths (or latency paths): a first data path with a low amount of error correction overhead and with a low interleaving depth or even without interleaving (and as a result a low latency), and a second data path with a high amount of error correction overhead and with a high interleaving depth (and as a result a high latency). The applications that are less error-critical (e.g., web browsing) and/or that are delay sensitive (e.g., VOIP) will occupy the low latency path (also called the fast path), while the high latency path (also called the interleaved or slow path) will be used for error-critical applications (e.g., VOD or IPTV).

The difficulties with dual latency are:

- to determine the optimal amount of error correction overhead and interleaving depth for the respective data paths. Most operators will use a network-wide configuration for all subscriber lines, which is clearly suboptimal.
- to determine which tones are to be used for the respective data paths. In ADSL2 and VDSL2 standards, mapping of the data paths onto the carriers, also referred to as tone ordering, is not fixed by the standard but programmable under control of the receiver.

It is an object of the present invention to improve reliability of data transmission over a legacy access network wherein impulse noise is a predominant impairment (not necessarily the predominant one), and to overcome the aforementioned drawbacks.

According to the invention, this object is achieved due to the fact that said multi-carrier transceiver unit further comprises a measurement unit coupled to said receiver, and adapted to measure on a per-carrier basis exposures to impulse noise coupling into said multi-carrier signal,

and in that said configuration means is further coupled to said measurement unit, and is further adapted to map said plurality of data paths onto carriers of said multi-carrier signal based on said measured exposures.

carriers are first ordered based on their exposure (or vulnerability or sensitiveness) to impulse noise as measured by the measurement unit, and next are assigned to the respective data paths based on this ordering.

Exposure of a carrier to impulse noise can be determined e.g. by measuring for that specific carrier the occurrence frequency (or rate) of impulse noise, which impulse noise being characterized by a substantial increase in a noise power/voltage/current level for that carrier. Another possibility is to collect on a per-carrier basis a noise histogram: carriers with a substantial tail in that histogram indicate a higher exposure to impulse noise.

Exposure to impulse noise depends on many factors, such as the background noise floor level, the source of impulse noise, the coupling function between the source of impulse noise and the physical transmission medium, etc, and is very much dependent on the carrier index (or carrier frequency).

For example, when deploying ADSL2+, the noise spectrum below 1,1 MHz is occupied by the already present ADSL1 crosstalkers, while the noise spectrum above 1,1 MHz has a relatively low amplitude. As a result, the carriers below 1,1 MHz will be less error prone to impulse noise since most of the impulse noise is masked by the already present crosstalk.

A transceiver according to the invention is advantageous in that tone ordering dynamically fits to the actual amount of impulse noise that each and every carrier is undergoing, thereby achieving higher reliability and robustness for data transmission.

There is also no need to configure an overly pessimistic amount of error correction and/or interleaving depth, thereby enabling the operator to maximize the overall data rate and/or delay.

A further embodiment of a transceiver according to the invention is characterized in that said plurality of data paths comprises a first data path with high error correction capability, and a second data path with low error correction capability,
and in that said configuration means is further adapted to map said first data path onto carriers that have been measured as less exposed to impulse noise.

For instance, the first data path refers to a data path with a high amount of error correction overhead and with a high interleaving depth (and thus with a high latency), and the second data path refers to a data path with a low amount of error correction overhead and with a low interleaving depth or without interleaving (and thus with a low latency).

Alternatively, the first data path may also refer to a data path with automatic re-transmission capability, and the second data path may refer to a data path without automatic re-transmission capability. Re-transmission capabilities are typically implemented between a pair of transceivers, at multi-carrier symbol level, whereby corrupted multi-carrier symbols are re-transmitted, or at some higher level, whereby some corrupted framed data are re-transmitted.

This embodiment is particularly advantageous in that the tones that are less exposed to impulse noise are assigned to data paths that are primarily used by error-critical applications such as VOD or broadcast TV, thereby improving data transmission reliability for those applications at a further extent.

An alternative embodiment of a transceiver according to the invention further comprises a communication means coupled to said configuration means, and adapted to send channel information whereby a remote transceiver derives mapping between said plurality of data paths and said carriers as determined by said configuration means.

The outcome of the tone ordering process according to the invention is reported back to the remote transmitter for further configuration at the transmit side, thereby achieving full and autonomous synchronization between the transmit and receive side.

The present invention also relates to a method for configuring a plurality of data paths with different error correction capabilities over a multi-carrier signal.

A method according to the invention comprises the steps of:

- measuring on a per-carrier basis exposures to impulse noise coupling into said multi-carrier signal,
- mapping said plurality of data paths onto carriers of said multi-carrier signal based on said measured exposures.

Embodiments of a method according to the invention correspond with the embodiments of a transceiver according to the invention.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Finally, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:

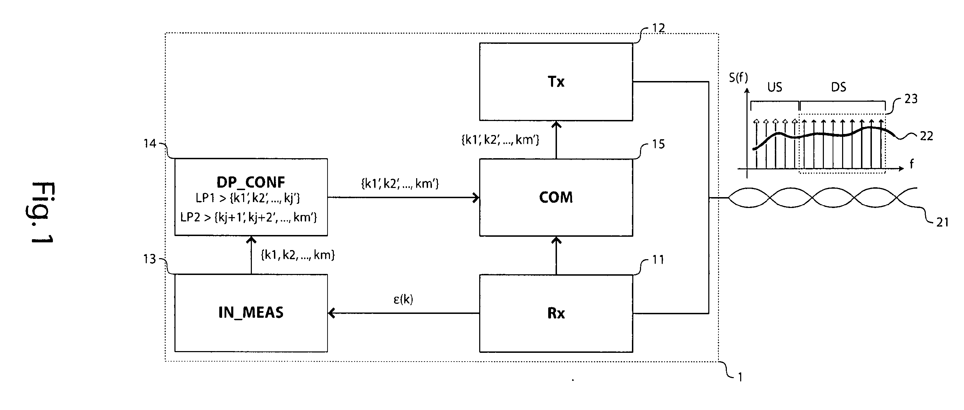

- fig. 1 represents a transceiver unit according to the invention.

There is seen in fig. 1 a transceiver unit 1 comprising:

- a receiver 11 (or Rx),
- a transmitter 12 (or Tx),
- a measurement unit 13 (or IN_MEAS) for measuring exposures of carriers to impulse noise,
- a configuring means 14 (or DP_CONF) for configuring data paths, and more specifically for mapping data paths onto respective carriers,
- a communication means 15 (or COM) for sending channel information to a remote transceiver (not shown).

The receiver 11 and the transmitter 12 are coupled (via an hybrid circuit not shown) to a physical medium 21, such as a twisted copper pair. The measurement unit 13 is coupled to the receiver 11. The configuration means 14 is coupled to the measurement unit 13. The communication means 15 is coupled to the configuration means 14, to the receiver 11 and to the transmitter 12.

The transceiver unit 1 is assumed to be a DSL transceiver unit, being an ADSL, ADSL2+, SDSL, VDSL, VDSL2 transceiver unit. It is further assumed that the transceiver unit 1 is located at customer premises, and forms part of a customer equipment such as a modem, or a set top box. The direction of communication from the central office to the customer premises is referred to as downstream communication (or DS), and the direction of communication from the customer premises to the central office is referred to as upstream communication (or US).

It is also assumed that the DSL transceiver unit 1 operates in dual-latency mode, wherein n a first data path LP1 with a high amount of error correction overhead and with a high interleaving depth, and a second data path LP2 with a low amount of error correction overhead and with a low interleaving depth or without interleaving, are configured. Yet, 3 or more data paths may have been configured as well with different amounts of error correction overhead and/or different interleaving depths.

The error correction capability of a data path is typically defined by the parameter set {R, N, S, D}, wherein:

- N denotes the number of bytes per RS codeword,
- R denotes the number of RS overhead bytes (or RS parity bytes) per RS codeword,
- D denotes the interleaving depth, and
- S denotes the number of multi-carrier data symbols per RS codeword (or spreading factor).

The spreading factor s is given by:

$$S = \frac{8 \times N}{L} \quad (1),$$

wherein L is the number of bits per multi-carrier data symbol.

The Impulse Noise Protection (INP) is defined as the number of consecutive impulse-noise corrupted multi-carrier data symbols that can be corrected.

The INP and the average interleaving delay of a data path are given by:

$$INP = \frac{1}{2}(S \times D) \times \left(\frac{R}{N}\right) \quad (2),$$

$$delay\,(ms) = \frac{S \times D}{4} \quad (3),$$

wherein 4000 is assumed as multi-carrier data symbol rate per second.

Increasing the INP of a data path, that is to say increasing its immunity to impulse noise, can be achieved by:

- increasing the RS overhead length R versus the RS codeword length N, thereby decreasing the total data rate usable over that data path,
- decreasing the RS codeword length N versus the RS overhead length R, thereby decreasing the total usable data rate,
- increasing the interleaving depth D, thereby increasing the path latency,
- increasing the spreading factor s (e.g., by reducing the total bit loading of a multi-carrier data symbol), thereby increasing the path latency and decreasing the total usable data rate.

Let {R1, N1, S1, D1} and {R2, N2, S2, D2} denote the quartet values assigned to the data paths LP1 and LP2 respectively, and INP1 and INP2 their respective INP.

we have thus:

$$\mathtt{INP1} = \frac{1}{2}(\mathtt{S1} \times \mathtt{D1}) \times \left(\frac{\mathtt{R1}}{\mathtt{N1}}\right) > \mathtt{INP2} = \frac{1}{2}(\mathtt{S2} \times \mathtt{D2}) \times \left(\frac{\mathtt{R2}}{\mathtt{N2}}\right) \quad (4).$$

There is also seen in fig. 1 the frequency spectrum s(f) of a multi-carrier signal 22 propagating over the transmission medium 21. carriers are typically assigned to a particular direction of communication, and there is seen 2 frequency bands for upstream and downstream communication as an exemplary embodiment (see US and DS respectively in fig. 1). Yet, upstream and/or downstream communication may also be spread over 2 or more disjoint or overlapping frequency bands.

The receiver 11 is adapted to de-modulate carriers 23 assigned to downstream communication.

The following steps are typically performed in the receiver 11:

- Analog to Digital Conversion (ADC),
- time-domain signal equalization,
- Fast Fourier Transform (FFT),
- frequency-domain signal equalization,
- constellation de-mapping, comprising the step of applying to a frequency sample an appropriate constellation grid, the pattern of which depends on the actual bit loading used over that frequency, and the step of deriving therefrom the original encoded bit sequence and the corresponding phase and amplitude demodulation error $\varepsilon(k)$, k denoting a carrier index,
- possibly trellis decoding,
- tone re-ordering,
- data de-interleaving,
- RS decoding (byte errors, if any, are corrected during this s step).

The phase and amplitude demodulation error $\varepsilon(k)$, which is a good estimate for the actual noise affecting a carrier, are determined on a per-carrier basis and are made available to the measurement unit 13.

The transmitter 12 is adapted to modulate the carriers assigned to upstream communication with a particular payload, and roughly performs the inverse aforementioned steps: RS encoding, data interleaving, tone ordering, possibly trellis encoding, constellation mapping, gain scaling, Inverse Fast Fourier Transform (IFFT), Digital to Analog Conversion (DAC).

The receiver 11 and the transmitter 12 map typically to PMS-TC and PMD functions, as defined for instance in G.992.3 ADSL2 standard or G.993.2 VDSL2 standard.

The measurement unit 13 is adapted to measure exposures to impulse noise on a per-carrier basis based on the magnitude $|\varepsilon(k)|$ of the demodulation error as determined by the receiver 11.

The measurement unit 13 determines on a per-carrier basis the occurrence frequency of impulse noise, e.g. by measuring how many times the magnitude of the demodulation error $|\varepsilon(k)|$ exceeds the average noise level (or noise floor level) observed on that carrier by a given threshold, which is a hint that impulse noise corrupted that carrier at some extent.

The measurement unit 13 may alternatively measure exposures to impulse noise based on the square magnitude $|\varepsilon(k)|^2$ (or power spectral density) of the demodulation error.

Next, the downstream carriers 23 are sorted according to the so-measured occurrence frequency, thereby yielding a sorted set of carriers {k1, k2, ... km}, wherein m denotes the number of carriers assigned to downstream communication, k1 denotes the carrier index with the lowest occurrence frequency (or alternatively speaking the carrier that is the least exposed to impulse noise), and km denotes the carrier index with the highest occurrence frequency (or alternatively speaking the carrier that is the most exposed to impulse noise).

The measurement unit 13 may also take into account further/alternative pieces of informations. For example, the measurement unit 13 may consider the amount of impulse noise that was observed on each and every carrier, e.g. by measuring the extent by which noise exceeds the average noise level, or by computing the non-biased variance of the noise over time.

The configuration means 14 is adapted to assign the downstream carriers 23 to the respective data paths LP1 and LP2 based on the so-measured exposures.

The configuration means 14 scans the ordered set of tones {k1, k2, ..., km} starting from k1 rightwards, and assigns the tones that are less exposed to impulse noise to the data path LP1 till the data rate required for that path is reached (considering also the bit loadings b(k) of the corresponding tones as computed by the receiver during channel initialization phase), and next assigns the remaining tones to the data path LP2.

Alternatively, the configuration means 14 may scan the ordered set of tones {k1, k2, ..., km} starting from km leftwards, and may assign the tones that are more exposed to impulse noise to the data path LP2 till the data rate required for that path is reached, and next may assign the remaining tones to the data path LP1.

Still alternatively, the configuration means 14 may concurrently assign the tones that are less exposed to impulse noise and the tones that are more exposed to impulse noise to the data paths LP1 and LP2 respectively, till their respective data rate is reached, or till all the tones have been assigned. Next, the configuration means 14 may distribute the remaining tones, if any, to the data paths LP1 and LP2, possibly still considering their exposure to impulse noise.

The so-determined mapping yields a tone ordering table {k1', k2', ..., km'}, that will ultimately control onto which specific carriers a data path is mapped. Indeed, the transmitter takes L1 bits out of L bits per multi-carrier data symbol for the data path LP1, and maps them onto the first carriers k1' to kj', wherein j denotes some index between 1 and m, next takes L2 bits out of L bits per multi-carrier data symbol for the data path LP2, and maps them onto the next carriers kj+1' to km'. L1 and L2 are directly derivable from the actual data rates that are achievable over the physical transmission medium 21 for the data paths LP1 and LP2 respectively, and that have been determined during channel initialization phase based on required data rates. L1 and L2 satisfy the following equation:

$$L1 + L2 = L \ (5).$$

If trellis encoding is enabled, another tone ordering is used that is deterministically derivable from the original tone ordering table {k1', k2', ..., km'}.

The tone ordering table {k1', k2', ..., km'} is eventually passed to the communication means 15, for further transmission towards the remote transceiver, presently the transceiver at the central office.

The communication means 15 is adapted to send the tone ordering table {k1', k2', ..., km'} as determined by the present invention to the remote transceiver. The remote transceiver then configures the transmitter accordingly, thereby achieving full synchronization of data transmission from the transmitter to the receiver.

In an alternative embodiment of the present invention, the carriers that are least exposed to impulse noise are assigned to the data path LP2, that is to say to the data path with low error correction capabilities.

such a tone ordering is useful if the amount of error correction that is configured for LP1 is able to overcome most of the impulse noise that a subscriber is undergoing, and thus there is no need to extend reliability of LP1 at a further extent, while the invention can still improve reliability of the best effort path LP2.

In a further embodiment of the present invention, LP1 is a data path with re-transmission capabilities, and LP2 is a data path without re-transmission capabilities.

The configuration means 14 assigns the tones that are least exposed to impulse noise to the data path with re-transmission capability first, presently to the data path LP1, and next assigns the remaining tones to the data path without re-transmission capability, presently to the data path LP2.

It is to be noticed that tone ordering according to the present invention can be carried out on all downstream carriers, or on a subset thereof. For instance, a few carriers may be preassigned to a particular data path, while others will be assigned according to the present invention.

It is also to be noticed that tone ordering according to the present invention can be similarly carried out by a transceiver unit at a central office or at a remote location, and forming part of e.g. a DSLAM or a remote unit, on all or part of the upstream carriers, and can be reported back to the transceiver unit at the customer premises.

It is also to be noticed that the present invention is not restricted to DSL-based system, but is applicable to whatever multi-carrier wired/wireless communication technology wherein impulse noise, or any other time-varying noise, is a major impairment. For instance, the physical transmission medium 21 could stand for a coaxial cable, a power line, or the atmosphere.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

while the principles of the invention have been described above in connection with specific apparatus, it is to be clearly understood that this description is made only by way of example and not as a limitation on the scope of the invention, as defined in the appended claims.

**Claims**

1. A multi-carrier transceiver (1) comprising:

   - a receiver (11) adapted to receive a multi-carrier signal (22) from a physical transmission medium (21),
   - a configuration means (14) adapted to configure a plurality of data paths (LP1, LP2) with different error correction capabilities over said multi-carrier signal,

   *characterized in that* said multi-carrier transceiver unit further comprises a measurement unit (13) coupled to said receiver, and adapted to measure on a per-carrier basis exposures to impulse noise coupling into said multi-carrier signal,
   *and in that* said configuration means is further coupled to said measurement unit, and is further adapted to map said plurality of data paths onto carriers (23) of said multi-carrier signal based on said measured exposures.

2. A multi-carrier transceiver (1) according to claim *1, characterized in that* said plurality of data paths comprises a first data path (LP1) with high error correction capability, and a second data path (LP2) with low error correction capability,
   *and in that* said configuration means is further adapted to map said first data path onto carriers (k1' to kj') that have been measured as less exposed to impulse noise.

3. A multi-carrier transceiver (1) according to any of the preceding claims, *characterized in that* said measurement unit is further adapted to measure said exposures by measuring on a per-carrier basis frequency occurrences of impulse noise.

4. A multi-carrier transceiver (1) according to any of the preceding claims, *characterized in that* said measurement unit is further adapted to measure said exposures by measuring on a per-carrier basis magnitudes of impulse noise.

5. A multi-carrier transceiver (1) according to any of the preceding claims, *characterized in that* said multi-carrier transceiver further comprises a communication means (15) coupled to said configuration means, and adapted to send channel information ({k1', k2', ..., km'}) whereby a remote transceiver derives mapping between said plurality of data paths and said carriers as determined by said configuration means.

6. A method for configuring a plurality of data paths (LP1, LP2) with different error correction capabilities over a multi-carrier signal (22),
   *characterized in that* said method comprises the steps of:

   - measuring on a per-carrier basis exposures to impulse noise coupling into said multi-carrier signal,
   - mapping said plurality of data paths onto carriers (23) of said multi-carrier signal based on said measured exposures.

Fig. 1

**European Patent Office**

## EUROPEAN SEARCH REPORT

Application Number

EP 06 29 2041

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/41505 A2 (BROADCOM CORP [US]) 23 May 2002 (2002-05-23) * abstract * * page 2, line 3 - line 30 * * page 4, line 16 - page 6, line 21 * * page 10, line 23 - page 11, line 4 * * page 18, line 15 - page 19, line 27 * * page 21, line 28 - page 22, line 22 * * page 23, line 19 - page 24, line 11 * ----- | 1-6 | INV. H04L5/02 H04L5/06 H04L5/14 H04L27/26 ADD. H04L1/00 |
| X | WO 01/41313 A1 (INTELLON CORP [US]) 7 June 2001 (2001-06-07) * abstract * * page 1, line 14 - line 23 * * page 2, line 2 - line 4 * * page 7, line 31 - page 8, line 19 * * page 14, line 3 - line 7 * * page 17, line 26 - line 29 * * page 20, line 20 - page 23, line 16 * * page 24, line 16 - line 18 * ----- | 1-6 | |
| X | EP 1 341 335 A (TEXAS INSTRUMENTS INC [US]) 3 September 2003 (2003-09-03) * abstract * * paragraph [0003] * * paragraph [0010] * * paragraph [0031] - paragraph [0033] * * paragraph [0038] - paragraph [0039] * * paragraph [0046] * * paragraph [0052] - paragraph [0065] * * paragraph [0071] - paragraph [0075] * * paragraph [0089] * * paragraph [0106] * ----- -/-- | 1-6 | TECHNICAL FIELDS SEARCHED (IPC) H04L |

The present search report has been drawn up for all claims

| Place of search | Date of completion of the search | Examiner |
|---|---|---|
| Munich | 21 May 2007 | Palacián Lisa, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 29 2041

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/223511 A1 (TZANNES MARCOS C [US]) 11 November 2004 (2004-11-11) * paragraph [0008] * * paragraph [0013] * * paragraph [0028] * * paragraph [0031] - paragraph [0032] * * paragraph [0036] * * paragraph [0038] * * paragraph [0041] * * paragraph [0048] * * paragraph [0068] - paragraph [0071] * * paragraph [0082] - paragraph [0089] * ----- | 1-6 | |

TECHNICAL FIELDS
SEARCHED    (IPC)

The present search report has been drawn up for all claims

| Place of search | Date of completion of the search | Examiner |
|---|---|---|
| Munich | 21 May 2007 | Palacián Lisa, Marta |

EPO FORM 1503 03.82 (P04C01)

**ANNEX TO THE EUROPEAN SEARCH REPORT**
**ON EUROPEAN PATENT APPLICATION NO.**                    EP 06 29 2041

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2007

| Patent document cited in search report | | Publication date | Patent family member(s) | | Publication date |
|---|---|---|---|---|---|
| WO 0241505 | A2 | 23-05-2002 | DE | 60119567 T2 | 03-05-2007 |
| | | | EP | 1338109 A2 | 27-08-2003 |
| WO 0141313 | A1 | 07-06-2001 | AU | 1950401 A | 12-06-2001 |
| | | | CA | 2394526 A1 | 07-06-2001 |
| | | | EP | 1262026 A2 | 04-12-2002 |
| | | | JP | 2003516085 T | 07-05-2003 |
| | | | US | 2002188908 A1 | 12-12-2002 |
| | | | US | 6397368 B1 | 28-05-2002 |
| EP 1341335 | A | 03-09-2003 | NONE | | |
| US 2004223511 | A1 | 11-11-2004 | NONE | | |

EPO FORM P0459

For more details about this annex : see Official Journal of the European Patent Office, No. 12/82